**Europäisches Patentamt**

**European Patent Office**

**Office européen des brevets**

(19)

(11) Veröffentlichungsnummer: **0 654 615 A1**

# (12) EUROPÄISCHE PATENTANMELDUNG

(21) Anmeldenummer: **94116905.4**

(22) Anmeldetag: **26.10.94**

(51) Int. Cl.⁶: **F16D 65/02**, F16D 65/04

(30) Priorität: **27.10.93 DE 4336676**

(43) Veröffentlichungstag der Anmeldung:
**24.05.95 Patentblatt 95/21**

(84) Benannte Vertragsstaaten:
**DE FR GB IT SE**

(71) Anmelder: **KNORR-BREMSE SYSTEME FÜR NUTZFAHRZEUGE GmbH**
**Moosacher Strasse 80**
**D-80809 München (DE)**

(72) Erfinder: **Iraschko, Johann**
**Reisdorf 23 1/2**
**D-85301 Schweitenkirchen (DE)**

(74) Vertreter: **KUHNEN, WACKER & PARTNER**
**Alois-Steinecker-Strasse 22**
**D-85354 Freising (DE)**

(54) **Abstützung eines Bremsbelags einer Scheibenbremse.**

(57) Es wird eine Abstützung eines Bremsbelags im Bremsbelagschacht einer Scheibenbremse offenbart, bei der der Bremsbelagschacht zwei seitliche Führungsflächen (31) für die Bremsbacke (10) aufweist, die sich an der auslaufseitigen Führungsfläche des Bremsbelagschachts abstützt, wenn sie beim Bremsen an der Bremsscheibe (1) anliegt. Um zu erreichen, daß kein Umfangsschrägverschleiß auftritt, wird vorgeschlagen, den Bremsbelag an der auslaufseitigen Führungsfläche (31) des Bremsbelagschachts über eine in Zuspannrichtung abfallende schiefe Ebene abzustützen, deren Neigung mindestens so groß gewählt ist wie der Reibungswinkel.

Fig. 3

Die vorliegende Erfindung bezieht sich auf die Abstützung eines Bremsbelags im Bremsbelagschacht der Zuspannvorrichtung einer Scheibenbremse gemäß dem Oberbegriff des Anspruchs 1. Gegenstand der vorliegenden Erfindung sind ferner nach der erfindungsgemäßen Lehre ausgebildete Bremsbeläge und Bremsbelagschächte.

Bei herkömmlichen Bremsbelagschächten für Scheibenbremsen sind üblicherweise zwei seitliche Führungsflächen für den bremsscheibenabgewandt von der Zuspannvorrichtung beaufschlagten Bremsbelag vorgesehen. Wenn die Zuspannvorrichtung zum Bremsen betätigt wird, wird der Bremsbelag von dieser zur Bremsscheibe hin geschoben und liegt mit seiner Reibfläche schließlich an der betreffenden Seitenfläche der Bremsscheibe an. Infolge der dabei auftretenden Brems-Reibungskräfte wird der Bremsbelag zur stromabseitigen bzw. auslaufseitigen Führungsfläche des Bremsbelagschachts hin bewegt und stützt sich sodann an dieser Führungsfläche ab. Im nicht zugespannten bzw. bremsfreien Zustand liegt der Bremsbelag hingegen vergleichsweise lose im Bremsbelagschacht.

Sobald der Bremsbelag beim Zuspannen der Scheibenbremse in der Anfangsphase des Bremsvorgangs an der Bremsscheibe anliegt und dabei schließlich, wie vorstehend erwähnt, die stromabseitige Führungsfläche des Bremsbelagschachts berührt, überträgt sich die Drehbewegungskraft der Bremsscheibe auf diese stromabseitige Abstützung des Bremsbelags und ruft dort eine der Zuspannkraft entgegenwirkende Reibungskraft hervor. Beim weiteren Zuspannen der Scheibenbremse muß daher diese Reibungskraft von der Zuspannvorrichung zusätzlich überwunden werden.

Bei den am häufigsten verwendeten Scheibenbremsen, bei denen auch die gattungsgemäßen Belagschächte üblicherweise verwendet werden, ist als Bremssattel ein sogenannter Schwimmsattel vorgesehen, der bei anliegender Bremsbacke aufgrund der in Axialrichtung wirkenden Reaktionskräfte mit der Bremsscheibe in Gegenrichtung verschoben wird und dadurch einen auf der gegenüberliegenden Seite befindlichen, weiteren Bremsbelag gleichfalls gegen die Bremsscheibe preßt. Da dieser gegenüberliegenden Bremsbelag in einem zumindest weitgehend identisch ausgebildeten Belagschacht geführt ist, tritt an dessen stromabseitiger Führungsfläche eine ebenso große Reibungskraft auf; die Zuspannvorrichtung wird hierdurch zusätzlich beansprucht.

Die genannten Reibungskräfte an der jeweiligen stromabseitigen Führungsfläche des Belagschachts haben zum einen den Nachteil, daß die Zuspannvorrichtung eine erhöhte Bremskraft aufbringen muß, wodurch der Gesamtwirkungsgrad der Scheibenbremse nicht unerheblich herabgesetzt wird.

Ein weiterer, noch gravierenderer Nachteil dieser unerwünschten Reibungskräfte liegt jedoch darin, daß hierdurch der sogenannte Umfangsschrägverschleiß hervorgerufen wird: herkömmliche Zuspannvorrichtungen leiten ihre Zuspannkraft nämlich mittig bzw. zentral in den Bremsbelag ein, während die jeweilige Reibungskraft der Bremsbeläge lediglich einseitig wirkt. Hierdurch ergibt sich insgesamt eine unsymmetrische Kraftverteilung im Bremsbelag, so daß dieser mit ungleichmäßiger Kraft gegen die Bremsscheibe gepreßt wird. Der Bremsbelag wird daher an seinem stromaufseitigen bzw. einlaufseitigen Bereich, wo die aufgebrachte Zuspannkraft größer ist, langfristig stärker abgerieben. Es ergibt sich somit ein in Umfangsrichtung schräg verlaufendes Abriebprofil, das die Lebensdauer des Bremsbelags entsprechend herabsetzt.

In der **DE 42 12 353 A1** der Anmelderin wird zur Lösung dieses Problems bei einer zwei Stellspindeln aufweisenden Zuspannvorrichtung vorgeschlagen, die zwei Stellspindeln derart zu koppeln, daß der Abstand zur Bremsscheibe der bezogen auf die Drehrichtung der Bremsscheibe auslaufseitig befindlichen Stellspindel um ein vorbestimmtes Maß geringer als der Abstand der anderen Stellspindel ist. Mit diesem unterschiedlich eingestellten Abstand bzw. Axialversatz der beiden Stellspindeln wird erreicht, daß die Bremsbeläge bei Beginn der Zuspannung zunächst an ihren auslaufseitig gelegenen Bereichen mit der Bremsscheibe in Kontakt geraten, so daß zunächst dort ein entsprechender Abrieb auftritt, der bei exakter Einstellung des Radialversatzes den erhöhten Abrieb der einlaufseitig gelegenen Bereiche genau zu kompensieren vermag. Infolgedessen kann bei optimaler Justierung ein Umfangsschrägverschleiß weitgehend vermieden werden. Diese Maßnahme scheidet bei solchen Zuspannvorrichtungen, die lediglich eine Stellspindel oder ein hierzu äquivalentes Bauteil aufweisen, jedoch naturgemäß aus.

Der die Lebensdauer der Bremsbeläge verringernde Umfangsschrägverschleiß wird darüber hinaus von dem sogenannten "Servoeffekt" beeinflußt. Dieser ist auf die unterschiedlichen Wirkebenen zwischen der Reibungskraft des jeweiligen Bremsbelags an der Bremsscheibe und seiner Abstützkraft im Belagschacht zurückzuführen. Dieser Servoeffekt wird zwar mit zunehmendem Belagverschleiß geringer, ist jedoch ebenfalls nicht ohne Einfluß auf das Verschleißverhalten der Bremsbeläge. Im übrigen kann der Servoeffekt auch mit der aus der **DE 42 12 353 A1** bekannten Maßnahme nicht völlig kompensiert werden, weil sich die Geometrie der Wirkebenen in Abhängigkeit vom Belagverschleiß ändert.

Der Erfindung liegt die Aufgabe zugrunde, eine Abstützung für den Bremsbelag einer Scheibenbremse gemäß dem Oberbegriff des Anspruchs 1 derart weiterzubilden, daß unter gleichzeitiger Verbesserung des Bremswirkungsgrads eine Minimierung des Umfangsschrägverschleißes erzielbar ist.

Diese Aufgabe wird erfindungsgemäß mit den im Kennzeichnungsteil des Anspruchs 1 angegebenen Maßnahmen gelöst.

Erfindungsgemäß ist demzufolge vorgesehen, den jeweiligen Bremsbelag an der stromabseitigen Führungsfläche des Bremsbelagschachts über eine in Zuspannrichtung abfallende schiefe Ebene abzustützen, deren Neigung $\phi$ mindestens so groß gewählt wird wie der Reibungswinkel $\rho$. Hierdurch wird erreicht, daß die "Hangabtriebskraft" der schiefen Ebene eine Querkraftkomponente erzeugt, die der an der Führungsfläche wirkenden Reibungskraft entgegenwirkt und diese entweder vollständig kompensiert ($\phi = \rho$) oder sogar überkompensiert ($\phi > \rho$). Im ersten Fall ist dadurch sichergestellt, daß die Kraftverteilung in den jeweiligen Bremsbelag wieder symmetrisch ist, so daß die erstgenannte Ursache des Umfangsschrägverschleißes völlig ausgeschaltet werden kann. Im zweiten Fall der Überkompensation kann zudem die andere Ursache des Umfangsschrägverschleißes, nämlich der erwähnte Servoeffekt kompensiert werden, so daß insgesamt eine nahezu vollständige Beseitigung des Umfangsschrägverschleißes erzielbar ist.

Durch die erfindungsgemäße Ausschaltung bzw. Kompensation der an der Führungsfläche des Bremsbelags wirkenden Reibungskraft wird darüber hinaus die insgesamt erforderliche Zuspannkraft entsprechend verringert, was den Wirkungsgrad der Zuspannvorrichtung nicht unerheblich verbessert. Weiterhin ist es von Vorteil, daß die Erfindung sowohl bei zweispindeligen als auch bei einspindeligen Zuspannvorrichtungen angewandt werden kann.

Gemäß der im Anspruch 2 angegebenen Weiterbildung der Erfindung kann unter der Annahme, daß zwischen der erfindungsgemäßen schiefen Ebene und dem Bremsbelag ein Reibungskoeffizient mit dem Wert $\mu$ vorliegt (der in der Praxis auf einfache Weise mit bekannten Mitteln bestimmt werden kann, die Neigung $\phi$ der schiefen Ebene nach der Formel $\phi \geq \arctan(\mu)$ bestimmt werden. Die jeweils geeignete Einstellung des Winkels $\phi$ der schiefen Ebene (Kompensation oder Überkompensation) ist daher schnell und einfach durchführbar.

Gemäß der im Anspruch 3 angegebenen Weiterbildung kann die erfindugsgemäße schiefe Ebene beispielsweise dadurch im Belagschacht selbst integriert werden, daß die stromabseitige Führungsfläche des Bremsbelagschachts als eine in Zuspannrichtung abfallende schiefe Ebene ausgebildet wird, wobei die ihr zugewandte Seitenfläche des Bremsbelags selbstverständlich als hierzu komplementär verlaufende schiefe Ebene ausgebildet sein muß. Diese Lösung erfordert somit lediglich eine geringfügige Modifikation des Bremsbelagschachts und des Bremsbelags selbst, so daß die Mehrkosten hierfür in vielen Fällen kaum nennenswert sein dürften. Wenn der Bremsbelag aus einer Bremsbacke und einer von der Zuspannvorrichtung beaufschlagten Druckplatte besteht, empfiehlt es sich hierbei nach der Lehre des Anspruchs 4, die komplementär verlaufende schiefe Ebene an der Seitenfläche der Druckplatte auszubilden.

Wenn die oben genannte Modifikation des Bremsbelagschachts aus Kostengründen oder Herstellungsschwierigkeiten nicht in Frage kommt oder wenn bereits vorhandene Scheibenbremsen mit der erfindungsgemäßen Abstützung nachgerüstet werden sollen, empfiehlt sich demgegenüber die im Anspruch 5 genannte Variante der Erfindung, derzufolge an der stromabseitigen Seitenfläche des Bremsbelags ein Stützkeil angeordnet wird, der eine in Zuspannrichtung abfallende schiefe Fläche aufweist, die an der als komplementär verlaufende schiefe Ebene ausgebildeten Seitenfläche des Bremsbelags verschiebbar anliegt. In diesem Fall muß der Bremsbelagschacht nicht modifiziert werden und es genügt, ggf. beim nächsten Belagwechsel neue, entsprechend der Lehre der Erfindung modifizierte Bremsbeläge einzusetzen.

Gemäß der Lehre des Anspruchs 6 empfiehlt es sich, den genannten Stützkeil unter Aufrechterhaltung der relativen Verschiebbarkeit am Bremsbelag zu befestigen, wobei dies gemäß Anspruch 7 auf billige und einfache Weise beispielsweise mittels einer Blattfeder erreicht werden kann. Wenn der Bremsbelag, wie vorstehend erwähnt, z.B. aus einer Bremsbacke und einer von der Zuspannvorrichtung beaufschlagten Druckplatte besteht, dann sollte der Stützkeil vorzugsweise an der Druckplatte des Bremsbelags befestigt werden.

Gemäß der Lehre der Ansprüche 9 bis 11 soll mit der Erfindung auch ein Bremsbelagschacht unter Schutz gestellt werden, dessen auslaufseitige Führungsfläche eine in Übereinstimmung mit den vorstehenden Ausführungen ausgebildete schiefe Ebene aufweist, deren Neigung mindestens so groß gewählt ist wie der Reibungswinkel zwischen ihr und dem jeweils verwendeten Bremsbelag.

Gegenstand der Erfindung ist nach der Lehre der Ansprüche 12 bis 15 schließlich auch ein Bremsbelag mit einer auslaufseitig vorgesehenen schiefen Ebene, der ggf. (siehe Ansprüche 14 und 15) mit dem bereits erwähnten Stützkeil versehen sein kann.

Die Erfindung wird nachstehend anhand der Beschreibung von Ausführungsbeispielen unter Bezugnahme auf die Zeichnung näher erläutert. Es zeigen:

**Fig.1** anhand eines Querschnitts den schematischen Aufbau einer zweispindeligen Zuspannvorrichtung;

**Fig.2** einen Längsschnitt der in Fig.1 gezeigten Zuspannvorrichtung;

**Fig.3** anhand einer lediglich schematischen Darstellung ein erstes Ausführungsbeispiel der Erfindung; und

**Fig.4** ein zweites Ausführungsbeispiel der Erfindung.

Um die der Erfindung zugrundeliegende Problematik zu verdeutlichen, sollen zunächst der prinzipielle Aufbau und die Wirkungsweise einer Scheibenbremse und deren Zuspannvorrichtung näher erläutert werden, bei der die Erfindung beispielsweise anwendbar ist.

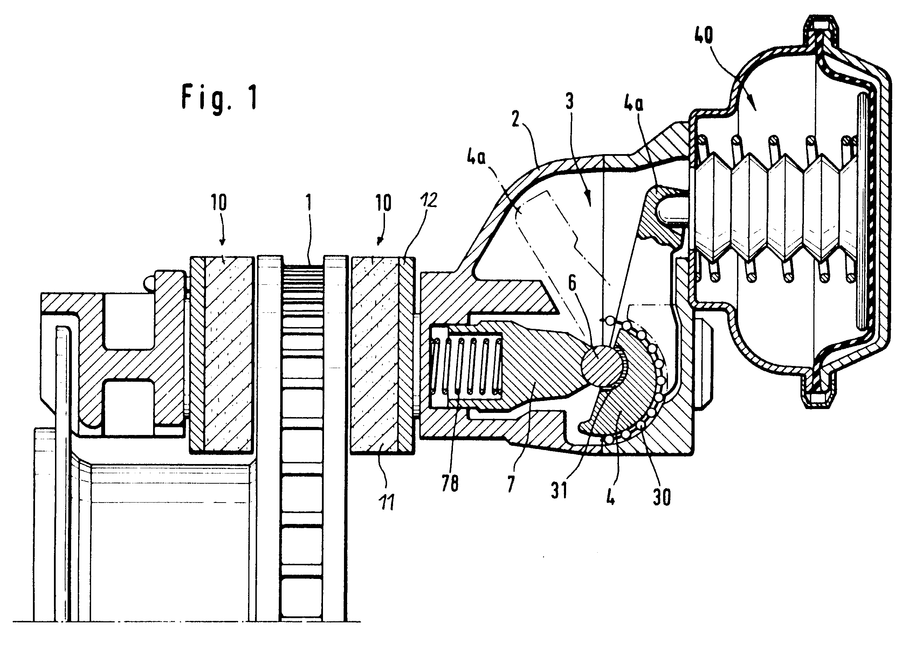

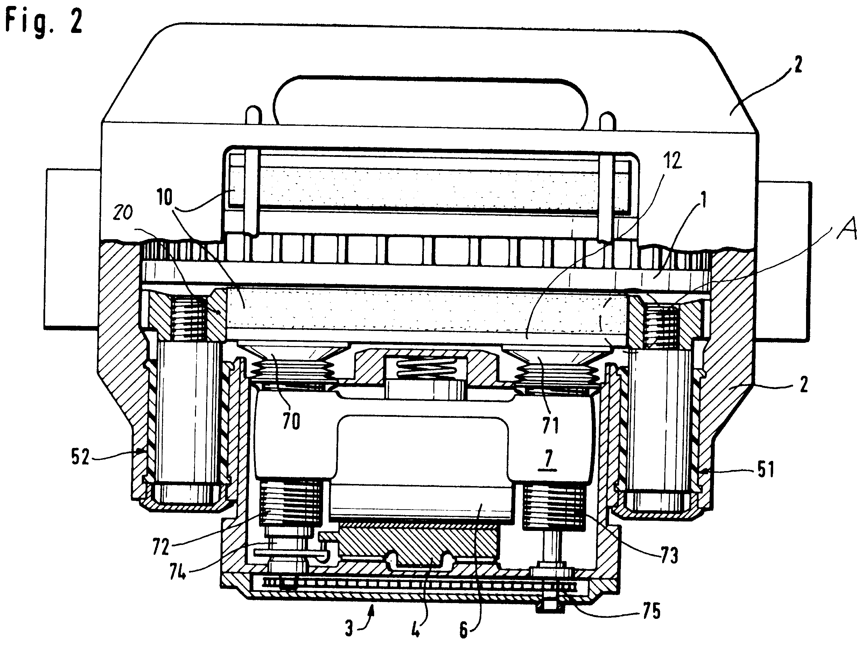

Wie aus den Figuren 1 und 2 zu erkennen ist, wird eine (innenbelüftete) Bremsscheibe 1, die an einer nicht näher bezeichneten Achse eines Nutzfahrzeugs befestigt ist, von einem Bremssattel 2 umfaßt. Der Bremssattel 2 ist gemäß Fig.2 mittels eines starren Führungslagers 52 sowie mittels eines Ausgleichslagers 51 in axialer Verschiebbarkeit bezüglich der Bremsscheibe 1 am Fahrzeug gelagert. Im übrigen sind Aufbau und Funktion des Bremssattels bekannt, so daß sich eine nähere Erläuterung erübrigt.

Auf der in Fig.1 rechten bzw. der in Fig.2 unteren Seite der Bremsscheibe 1 ist eine schematisch mit dem Bezugszeichen 3 bezeichnete zweispindelige Zuspannvorrichtung angeordnet. Im Bremssattel 2 ist ein im wesentlichen halbkreisförmiges Drehlager 30 vorgesehen, dessen Drehachse parallel zur Ebene der Bremsscheibe 1 verläuft und das den entsprechend abgerundeten Bereich eines Drehhebels 4 aufnimmt, so daß der Drehhebel 4 parallel zur Ebene der Bremsscheibe 1 verschwenkt werden kann. Zur Betätigung des Drehhebels 4 ist ein lediglich schematisch dargestellter Bremszylinder 40 vorgesehen, der mit einem Kolben in eine geeignet geformte Ausnehmung eines Betätigungsarms 4a des Drehhebels 4 eingreift. Wenn der Bremszylinder 40 mit der Druckluft beaufschlagt wird, wird der Betätigungsarm 4a des Drehhebels 4 folglich von seiner Ruheposition in die in Fig.1 in gestrichelter Darstellung angedeutete Position bewegt.

Die dem halbschalenförmigen Drehlager 30 abgewandte Seite des Drehhebels 4 ist über einen als Nocken dienenden Exzenter 6 mit einer Traverse 7 gekoppelt, die sich innerhalb des Bremssattels 2 im wesentlichen parallel zur Drehachse der Bremsscheibe 1 erstreckt und in dieser Ebene verschiebbar gelagert ist. An ihrem der Bremsscheibe 1 zugewandten Ende weist die Traverse 7 eine sacklochartige Ausnehmung auf, die von einem in Richtung zur Bremsscheibe 1 auskragenden, rohrartigen Ansatz umgeben ist. Dieser Ansatz der Traverse 7 ist in einer entsprechenden Ausnehmung des Bremssattels 2 rechtwinklig zur Ebene der Bremsscheibe 1 unter Beibehaltung eines derartigen Spiels schiebegelagert, daß die Traverse 7 eine geringfügige Schwenkbewegungen in der Zeichnungsebene ausführen kann. Innerhalb der Ausnehmung ist eine Spiralfeder 78 angeordnet, die zwischen die Traverse 7 und das der Bremsscheibe 1 zugewandte Ende des Bremssattels 2 eingespannt ist und dadurch die Traverse 7 zum Drehhebel 4 hin vorspannt.

Wie insbesondere dem Längsschnitt der Fig.2 entnehmbar ist, weist die Traverse 7 an beiden Seiten jeweils eine mit einem Innengewinde versehene Bohrung auf, in der jeweils eine Stellspindel 72 bzw. 73 justierbar verschraubt ist, deren Außengewinde in einem entsprechend geformten Innengewinde der Traverse 7 geführt ist. An dem der Bremsscheibe 1 zugewandten Ende jeder der Stellspindeln 72 und 73 ist ein sich kegelförmig verbreiterndes Druckstück 70 bzw. 71 befestigt. Da sich die beiden Stellspindeln 72 und 73 infolge ihrer Anordnung in der Traverse 7 senkrecht zur Ebene der Bremsscheibe 1 erstrecken, liegen die Druckstücke 70 und 71 mit ihren flachen Enden an der Druckplatte 12 eines Bremsbelags 10 an, der bremsscheibenseitig eine aus einem geeigneten Material bestehende Bremsbacke 11 aufweist. Der Bremsbelag 10 ist insbesondere in Umfangsrichtung zur Bremsscheibe 1 an den seitlichen Führungsflächen eines Bremsbelagschachts 20 quer zur Bremsscheibe 1 verschiebbar geführt, wobei der Bremsbelagschacht 20 entweder dem Bremssattel 2 oder einem Bremsträger zugeordnet sein kann.

Im Inneren der Stellspindel 72 ist eine Nachstelleinrichtung 74 angeordnet, die infolge einer Axialverzahnung drehfest mit der Stellspindel 72 gekoppelt und in axialer Richtung verschiebbar ist. Die Nachstelleinrichtung 74 wird bei jeder Betätigung des Drehhebels 4 um einen bestimmten Winkelbetrag gedreht, wodurch ein kontinuierliches Nachstellen der Bremse gewährleistet ist. In eine entsprechende Axialverzahnung der gegenüberliegenden Stellspindel 73 greift ein Zahnrad ein, das über eine Welle mit einer Synchronisationseinrichtung 75 gekoppelt ist, die das innenliegende Zahnrad und damit die Spindel 73 synchron mit der Nachstelleinrichtung 74 dreht. Hierdurch wird erreicht, daß das Druckstück 71 synchron mit dem Druckstück 70 nachgestellt wird.

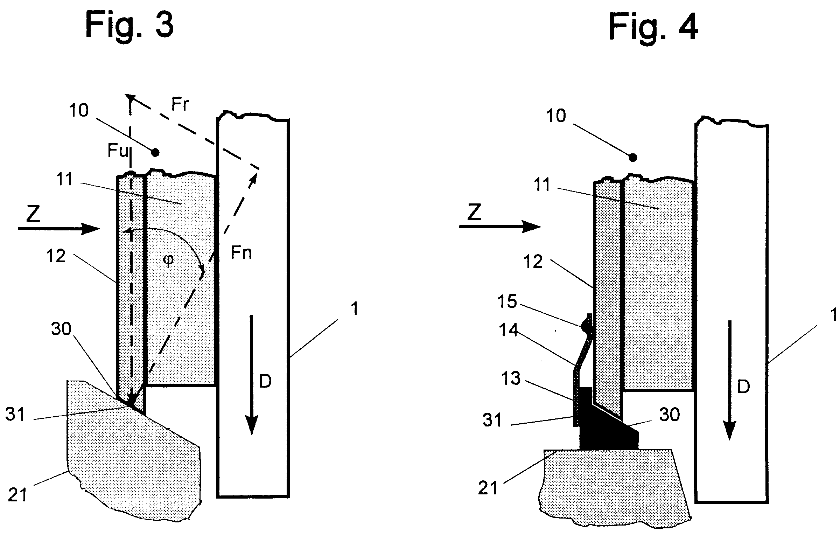

Nachfolgend wird das Arbeitsprinzip der Zuspanneinrichtung kurz erläutert. Bei Druckluftbeaufschlagung des Bremszylinders 40 wird der Betätigungsarm 4a gemäß Fig.1 nach links verschwenkt, wodurch der am Drehhebel 4 wirkende Exzenter 6 um eine entsprechend den Hebelgesetzen verringerte Strecke gleichfalls nach links verschoben wird. Die Traverse 7 wird daher entgegen der Vorspannkraft der Spiralfeder 78 um diese Wegstrecke zur Bremsscheibe 1 hin gedrückt. Die an der Traverse 7 über die Stellspindeln 72 und 73 befestigten Druckstücke 70 bzw. 71 drücken folglich unter Überwindung des Lüftspiels (das in der Praxis ca. 0,4 mm beträgt) den Bremsbelag 10 gegen die Bremsscheibe 1, wobei sich der Bremsbelag 10 an der auslaufseitigen, in den Figuren 3 und 4 mit dem Bezugszeichen 21 bezeichneten Führungsfläche des Bremsbelagschachts 20 abstützt, sobald er an der Bremsscheibe 1 anliegt. Dies ist darauf zurückzuführen, daß die Drehung der Bremsscheibe 1 infolge der Reibung eine in dieser Richtung wirkende Längskraft auf den Bremsbelag 10 ausübt.

Wenn der Betätigungsarm 4a weiter nach links verschwenkt wird, verschiebt sich der Bremssattel aufgrund der auf die Bremsscheibe 1 ausgeübten Kraft in Fig.1 nach rechts, so daß schließlich auch der linke Bremsbelag 10 gegen die Bremsscheibe 1 gepreßt wird. Auch dieser Bremsbelag stützt sich sodann an der auslaufseitigen Führungsfläche des gegenüberliegenden Bremsbelagschachts ab.

Da das Außengewinde der Stellspindeln 72 und 74 und das jeweils zugeordnete Innengewinde der Traverse 7 so dimensioniert sind, daß im druckbeaufschlagten Zustand entgegen der Zuspannrichtung eine Selbsthemmung auftritt, können sich die Stellspindeln nicht in diese Richtung wegbewegen, so daß der Bremsdruck solange aufrechterhalten bleibt, bis der Drehhebel 4 freigegeben wird.

Nachfolgend werden unter Bezugnahme auf die Figuren 3 und 4 zwei Ausführungsbeispiele der Erfindung näher erläutert; es ist anzumerken, daß die Darstellungen der Figuren 3 und 4 etwa dem in Fig.2 mit **A** bezeichneten Ausschnitt entsprechen.

Gemäß Fig.3 ist die auslaufseitige Führungsfläche 21 des Bremsbelagschachts als eine schiefe Ebene 31 ausgebildet, die in der mit **Z** bezeichneten Zuspannrichtung *abfällt*. Die dieser schiefen Ebene 31 zugewandte Seitenfläche des Bremsbelags 10 ist als hierzu komplementär verlaufende schiefe Ebene 30 ausgebildet. D.h., die schiefe Ebene 30 des Bremsbelags 10 hat - in Zuspannrichtung **Z** -gesehen einen *ansteigenden* Verlauf. In der in Fig.2 gezeigten Ausführungsform stützt sich der Bremsbelag 10 über seine Druckplatte 12 an der Führungsfläche 21 des Bremsbelagschachts ab.

Wenn sich die Bremsscheibe 1 in der mit **D** bezeichneten Drehrichtung dreht, übt sie infolge ihrer Reibung mit der Bremsbacke 11 des Bremsbelags 10 auf diesen eine bestimmte Kraft aus, die als parallel verlaufende Umfangskraft **Fu** auf die Führungsfläche 21 des Bremsbelagschachts übertragen wird. Wie aus dem in Fig.3 gezeigten Kraftdreieck hervorgeht, läßt sich diese Umfangskraft **Fu** in eine senkrecht zur Oberfläche der schiefen Ebene 31 verlaufende Normalkraft **Fn** und eine tangential zur Oberfläche der schiefen Ebene verlaufende Reibungskraft **Fr** aufspalten, wenn angenommen wird, daß ein Kräftegleichgewicht vorliegt, bei dem der mit $\phi$ bezeichnete Winkel zwischen der Umfangskraft **Fu** und der Normalkraft **Fn** dem sogenannten Reibungswinkel (dieser wird in der Fachliteratur meist mit $\rho$ bezeichnet) entspricht. In diesem Fall (Reibungswinkel $\rho = \phi$) hat die "Hangabtriebskraft" an der schiefen Ebene genau den gleichen Wert wie die Reibungskraft **Fr**, so daß diese kompensiert wird. Dies bedeutet, daß die resultierende Kraftkomponente in Zuspannrichtung **Z** gleich Null ist. Die mittig eingeleitete Zuspannkraft (siehe Fig.2) wird daher nicht mit einem Kippmoment beaufschlagt, so daß der Bremsbelag 10 völlig gleichmäßig gegen die Bremsscheibe 1 gepreßt wird und kein Schrägverschleiß auftreten kann.

Der hierfür erforderliche Winkel $\phi$ kann wie folgt berechnet werden: zunächst sei angenommen, daß zwischen den Oberflächen der beiden schiefen Ebenen 30 und 31 ein Reibungskoeffizient mit dem Wert $\mu$ vorliege. Aus dem gezeigten Kraftdreieck, bei dem der Reibungswinkel gleich dem Winkel $\phi$ ist, kann dann abgeleitet werden, daß $\mu = \tan\phi$. Hieraus folgt, daß der gesuchte Winkel $\phi = \arctan \mu$.

Wenn zur Verringerung oder zur völligen Ausschaltung des eingangs erläuterten Servoeffekts eine zusätzliche Kraftkomponente in Richtung zur Bremsscheibe 1 (d.h. in Zuspannrichtung **Z**) wirken soll, so muß der Winkel $\phi$ um ein geeignetes Maß größer gemacht werden, d.h. die Bedingung lautet dann: $\phi \geq \arctan \mu$. Das Maß, um das der Winkel $\phi$ den Wert von $\arctan \mu$ übersteigt kann entweder berechnet oder empirisch ermittelt werden.

Da die schiefe Ebene 30 der Druckplatte 12 des Bremsbelags 10 einen komplementären, d.h. bezüglich der Zuspannrichtung **Z** ansteigenden Verlauf hat, lautet die vorstehend ermittelte Bedingung genau umgekehrt, nämlich: $\phi \leq \arctan \mu$.

In der Fig.4 ist eine weitere Ausführungsform gezeigt, bei der an der stromabseitigen Seitenfläche 30 des Bremsbelags 10 ein Stützkeil 13 angeordnet ist, der eine in Zuspannrichtung abfallende schiefe Fläche 31 aufweist, die an der als komplementär verlaufende schiefe Ebene ausgebildeten Seitenfläche 30 des Bremsbelags 10 bzw. von dessen Druckplatte 12 verschiebbar anliegt. Diese Ausführungsform hat den Vorteil, daß der Bremsbelagschacht nicht modifiziert zu werden braucht, so daß die Nachrüstung bereits vorhandener Scheibenbremsen ohne weiters möglich ist. Diese Ausführungsform bietet sich auch dann an, wenn die bei der Ausführungsform der Fig.3 erforderliche Modifikation des Bremsbelagschachts aus Kostengründen oder Herstellungsschwierigkeiten nicht in Frage kommt.

Da der Stützkeil 13 unter Aufrechterhaltung der relativen Verschiebbarkeit zum Bremsbelag 10 an diesem befestigt werden muß, ist in der gezeigten Ausführungsform als Befestigungselement eine mit einer Schraube 15 oder dergleichen an der Rückseite der Druckplatte 12 befestigte Blattfeder 14 vorgesehen. Diese spannt den Stützkeil 13 ein stellt aufgrund ihrer Elastizität sicher, daß sich die beiden schiefen Ebenen 30 und 31 relativ zueinander verschieben können. Selbstverständlich können auch andere Befestigungseinrichtungen verwendet werden, die die gewünschte Verschiebbarkeit gewährleisten.

Obgleich die schiefe Ebene 30 bei den gezeigten Ausführungsformen an der Druckplatte 12 des Bremsbelags 10 ausgebildet ist, ist es ggf. auch möglich, die schiefe Ebene 30 an der Bremsbacke 11 auszubilden, falls die Druckplatte nicht die volle Länge des Bremsbelags 10 abdeckt. Bei einem Bremsbelag, der keine Druckplatte aufweist, besteht selbstverständlich keine andere Möglichkeit, als die schiefe Ebene an der Bremsbacke auszubilden.

Falls die Scheibenbremse, bei der das erläuterte Prinzip der Erfindung angewandt wird, bei Fahrzeugen verwendet wird, die auch bei der Rückwärtsfahrt vergleichsweise stark abbremsen, kann es u.U. von Vorteil sein, die genannten schiefen Ebenen auch an dem gegenüberliegenden, d.h. in den Figuren 3 und 4 nicht gezeigten "einlaufseitigen" Führungsbereich vorzusehen, der bei umgekehrter Drehrichtung wieder "auslaufseitig" liegt. Es ist insofern klar, daß sich die vorstehende Terminologie hinsichtlich des Begriffs "auslaufseitig" auf die gezeigte Drehrichtung der Bremsscheibe bezogen hat, so daß hieraus keine Beschränkung auf die in den Figuren gezeigte Seite hergeleitet werden kann.

Es muß nicht weiter erwähnt werden, daß es sich empfiehlt, das erläuterte Prinzip der Erfindung auch bei dem im gegenüberliegenden Schacht aufgenommenen Bremsbelag anzuwenden.

Das vorstehend erläuterte Prinzip der Erfindung ist selbstverständlich auch bei anderen Zuspannvorrichtungen als der anhand der Figuren 1 und 2 gezeigten verwendbar, etwa bei solchen, bei denen die Kraftübersetzung mittels eines Spreizkeils oder einer Kugelrampe erfolgt. Das angegebene Prinzip kann vielmehr bei allen Scheibenbremsen angewandt werden, bei denen der Bremsbelag von einem Bremsbelagschacht aufgenommen wird. Auch ist es für die Erfindung ohne Bedeutung, zu welcher Baueinheit der Scheibenbremse der Bremsbelagschacht gehört; dieser kann z.B. Teil des Bremssattels oder des Bremsträgers sein.

Bezüglich noch weiterer, nicht näher erläuterter Merkmale und Wirkungen der Erfindung wird im übrigen ausdrücklich auf die Zeichnung verwiesen.

## Patentansprüche

1. Abstützung eines Bremsbelags (10) im Bremsbelagschacht (20) der Zuspannvorrichtung (7) einer Scheibenbremse, bei der der Bremsbelagschacht (20) zwei seitliche Führungsflächen (21,22) für den bremsscheibenabgewandt von der Zuspannvorrichtung (7) beaufschlagten Bremsbelag (10) aufweist, der sich an der auslaufseitigen Führungsfläche (21) des Bremsbelagschachts (20) abstützt, wenn er beim Bremsen an der Bremsscheibe (1) anliegt, *dadurch gekennzeichnet*, daß sich der Bremsbelag (10) an der auslaufseitigen Führungsfläche (21) des Bremsbelagschachts (20) über eine in Zuspannrichtung abfallende schiefe Ebene (30,31) abstützt, deren Neigung ($\phi$) mindestens so groß gewählt ist wie der Reibungswinkel ($\rho$).

2. Abstützung nach Anspruch 1, bei der zwischen der schiefen Ebene (30,31) und dem Bremsbelag (10) ein Reibungskoeffizient mit dem Wert $\mu$ vorliegt, *dadurch gekennzeichnet, daß* die Neigung ($\phi$) der schiefen Ebene (30,31) nach der Formel

   $$\phi \geq \arctan(\mu)$$

   bestimmt wird.

3. Abstützung nach Anspruch 1 oder 2, *dadurch gekennzeichnet, daß* die auslaufseitige Führungsfläche (21) des Bremsbelagschachts (20) als eine in Zuspannrichtung abfallende schiefe Ebene (31) ausgebildet ist und daß die ihr zugewandte Seitenfläche des Bremsbelags (10) als hierzu komplementär verlaufende schiefe Ebene (30) ausgebildet ist.

4. Abstützung nach Anspruch 3, bei der der Bremsbelag (10) aus einer Bremsbacke (11) und einer von der Zuspannvorrichtung (7) beaufschlagten Druckplatte (12) besteht, *dadurch gekennzeichnet, daß* die komplementär verlaufende schiefe Ebene (30) an der Seitenfläche der Druckplatte (12) ausgebildet ist.

5. Abstützung nach Anspruch 1 oder 2, *dadurch gekennzeichnet, daß* an der auslaufseitigen Seitenfläche des Bremsbelags (10) ein Stützkeil (13) angeordnet ist, der eine in Zuspannrichtung abfallende schiefe Fläche (31) aufweist, die an der als komplementär verlaufende schiefe Ebene (30) ausgebildeten Seitenfläche (21) des Bremsbelags (10) verschiebbar anliegt.

6. Abstützung nach Anspruch 5, *dadurch gekennzeichnet, daß* der Stützkeil (13) unter Aufrechterhaltung der relativen Verschiebbarkeit am Bremsbelag (10) befestigt ist.

7. Abstützung nach Anspruch 6, *dadurch gekennzeichnet, daß* der Stützkeil (13) mittels einer Blattfeder (14) am Bremsbelag (10) befestigt ist.

8. Abstützung nach Anspruch 6 oder 7, bei der der Bremsbelag (10) aus einer Bremsbacke (11) und einer von der Zuspannvorrichtung (7) beaufschlagten Druckplatte (12) besteht, *dadurch gekennzeichnet, daß* der Stützkeil (13) an der Druckplatte (12) des Bremsbelags (10) befestigt ist.

9. Bremsbelagschacht (20) für die Zuspannvorrichtung (7) einer Scheibenbremse, mit zwei seitlichen Führungsflächen (21, 22) für den bremsscheibenabgewandt von der Zuspannvorrichtung (7) beaufschlagten Bremsbelag (10), der sich an der auslaufseitigen Führungsfläche (21) des Bremsbelagschachts (20) abstützt, wenn er beim Bremsen an der Bremsscheibe (1) anliegt,
*dadurch gekennzeichnet,*
daß die auslaufseitige Führungsfläche (21) des Bremsbelagschachts (20) als eine in Zuspannrichtung abfallende schiefe Ebene (31) ausgebildet ist, deren Neigung ($\phi$) mindestens so groß gewählt ist wie der Reibungswinkel ($\rho$) zwischen ihr und dem Bremsbelag (10).

10. Bremsbelagschacht (20) nach Anspruch 9, *dadurch gekennzeichnet, daß* die Neigung ($\phi$) der schiefen Ebene (31) nach der Formel

$$\phi \geq \arctan (\mu)$$

bestimmt wird, in der mit $\mu$ der zwischen der schiefen Ebene (31) und dem Bremsbelag (10) wirkende Reibungskoeffizient bezeichnet ist.

11. Bremsbelagschacht (20) nach Anspruch 9 oder 10, *dadurch gekennzeichnet, daß* der Bremsbelagschacht (20) im Bremssattel oder im Bremsträger ausgebildet ist.

12. Bremsbelag (10) zur Aufnahme in einem zwei seitliche Führungsflächen (21, 22) aufweisenden Bremsbelagschacht (20) der Zuspannvorrichtung (7) einer Scheibenbremse, dessen bremsscheibenabgewandte Seite von der Zuspannvorrichtung (7) derart beaufschlagbar ist, daß er sich an der auslaufseitigen Führungsfläche (21) des Bremsbelagschachts (20) abstützt, wenn er beim Bremsen an der Bremsscheibe (1) anliegt,
*dadurch gekennzeichnet*
daß diejenige Seitenfläche des Bremsbelags, die der auslaufseitigen Führungsfläche (21) des Bremsbelagschachts (20) zugewandt ist, als eine in Zuspannrichtung ansteigende schiefe Ebene (30) ausgebildet ist, deren Neigung ($\phi$) höchstens so groß gewählt ist wie der Reibungswinkel ($\rho$) zwischen ihr und der Führungsfläche (21) des Bremsbelagschachts (20).

13. Bremsbelag (10) nach Anspruch 12, *dadurch gekennzeichnet, daß* die Neigung ($\phi$) der schiefen Ebene (30) nach der Formel

$$\phi \leq \arctan (\mu)$$

bestimmt wird, in der mit $\mu$ der zwischen der schiefen Ebene (30) und der Führungsfläche (21) wirkende Reibungskoeffizient bezeichnet ist.

14. Bremsbelag (10) nach Anspruch 12 oder 13, *dadurch gekennzeichnet, daß* an der als schiefe Ebene (31) ausgebildeten Seitenfläche des Bremsbelags (10) ein Stützkeil (13) verschiebbar befestigt ist, der mit einer in Zuspannrichtung abfallenden schiefen Fläche (31) an der Seitenfläche des Bremsbelags (10) verschiebbar anliegt und mit seiner auslaufseitigen Fläche zur Anlage an der auslaufseitigen Führungsfläche (21) des Bremsbelagschachts (20) ausgebildet ist.

15. Abstützung nach Anspruch 14, *dadurch gekennzeichnet, daß* der Stützkeil (13) mittels einer Blattfeder (14) am Bremsbelag (10) befestigt ist.

# Fig. 1

Fig. 2

EP 0 654 615 A1

# Fig. 3

# Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE-C-12 53 968 (TEVES)<br>* Spalte 1, Zeile 49 - Spalte 3, Zeile 19; Abbildung 1 *<br>--- | 1,9,12 | F16D65/02<br>F16D65/04 |
| A | DE-B-14 25 243 (DUNLOP)<br>--- | | |
| A | DE-U-18 77 778 (TEVES)<br>--- | | |
| D,A | DE-A-42 12 353 (KNORR-BREMSE)<br>----- | | |
| | | | **RECHERCHIERTE SACHGEBIETE (Int.Cl.6)**<br><br>F16D |

Der vorliegende Recherchenbericht wurde für alle Patentansprüche erstellt

| Recherchenort | Abschlußdatum der Recherche | Prüfer |
|---|---|---|
| BERLIN | 6. März 1995 | Ludwig, H.J. |

EPO FORM 1503 03.82 (P04C03)